# EUROPEAN PATENT APPLICATION

(11) **EP 4 671 479 A1**
(43) Date of publication of application: **31.12.2025**
(21) Application number: 25185146.5
(22) Date of filing: 25.06.2025
(51) Int. Cl.: E05F 15/70, B60J 7/12

(54) **CONTROL SYSTEM AND CONTROL METHOD FOR A MOVEABLE WING ASSEMBLY AND A CONVERTIBLE ROOF ASSEMBLY OF A CONVERTIBLE ROAD VEHICLE AND RELATED ROAD VEHICLE**

(30) Priority: 26.06.2024 IT 202400014674
(71) Applicant: FERRARI S.p.A., 41100 Modena (IT)
(72) Inventor: ROSSI, Federico, 41100 Modena (IT); FRANCO, Alberto, 41100 Modena (IT); MANAZZA, Simone Stefano, 41100 Modena (IT)
(74) Representative: Studio Torta S.p.A.

(57) **Abstract**

A control system (20) for a movable wing assembly (10) and a roof assembly (3) for a road vehicle (1) comprising: a main electronic control unit (21); an electronic control unit (22) of the movable wing assembly (10) in communication with the main electronic control unit (21); and an electronic control unit (23) of the roof assembly (3) in communication with the main electronic control unit (21), wherein the main electronic control unit (21) is configured for determining the presence of a potential interference between the movable wing assembly (10) and the roof assembly (3), and for switching the operating condition of the movable wing assembly (10) or the roof assembly (3), thus avoiding a collision.

## Description

### CROSS-REFERENCE TO RELATED APPLICATIONS

This patent application claims priority from Italian patent application no. 102024000014674 filed on June 26, 2024, the entire disclosure of which is incorporated herein by reference.

### TECHNICAL FIELD

This invention relates to a control system and control method for a moveable wing assembly and a convertible soft top or rigid roof assembly for a road vehicle and a related road vehicle.

In particular, this invention is advantageously, but not exclusively, applicable in a movable wing assembly for high-performance road vehicles, to which the following description specifically refers but without any loss of generality thereby.

### BACKGROUND OF THE INVENTION

Convertible cars, that is, cars with a usually rigid, opening/retractable roof (*Retractable hardtop*)*,* which is usually folded away in a special compartment or inside the rear luggage compartment, are known.

Over the years, various methods and systems for opening and closing the roof in these convertible cars have been developed.

Italian patent application BO1313A000137 describes a convertible car with an opening hardtop with a four-seat passenger compartment (two in the front and two in the rear), an engine compartment arranged at the front (that is, in front of the passenger compartment) and closed by an engine bonnet, and a luggage compartment (or boot) arranged at the back (that is, behind the passenger compartment) and closed by a boot lid. The opening hardtop comprises a pair of rigid elements that are mechanically connected to a frame by means of respective connecting elements and, when the opening hardtop is arranged in an open position, are arranged within the luggage compartment (particularly in the upper area of the luggage compartment).

European Patent EP 2921329 describes a front-engine convertible car that has a passenger compartment; an opening hardtop; a rear luggage compartment that contains the hardtop when the hardtop is arranged in an open position; a cover that is arranged over the luggage compartment and is movable between a closed and an open position.

As is well known, a road vehicle, in particular a sports vehicle (also defined below as high-performance), as well as a non-sports vehicle, comprises a body, which in turn includes: a chassis, which defines an interior, invisible part of the road vehicle; and a bodywork, which comprises the outermost parts of the road vehicle and, therefore, defines an exterior part of the vehicle that is visible to external users.

Typically, the bodywork includes parts such as the sides, roof, doors, mudguards, bonnets and the like. The bodywork may also comprise wings or ailerons, that is, aerodynamic elements usually protruding from the rest of the bodywork and designed to generate downward thrust on the road vehicle in order to increase its grip on the ground. In the following, for the sake of simplicity, the terms "wing" and "aileron" are considered interchangeable with each other.

In known vehicles, movable parts such as the rear wing and the cover of the roof when retracted (in the upper portion of the luggage compartment) are usually spaced apart, that is, there is a fixed (not movable) bodywork portion between them. In these cases, however, although possible interference between moving parts is avoided due to the distance between them, the designers' design possibilities are limited, as is the optimisation of the overall dimensions (which are particularly important in high-performance vehicles).

The patent JP7056288B2 describes a control system for a roof assembly depending on the position of a rollover bar, but in no way describes a movable wing assembly adjacent to the roof assembly along a direction transverse to the direction of travel.

The patent JPH0767887B2 describes a control system for a roof assembly depending on the position of a boot lid, but in no way describes a movable wing assembly adjacent to the roof assembly along a direction transverse to the direction of travel.

### DESCRIPTION OF THE INVENTION

The purpose of this invention is to create a control system and control method for a moveable wing assembly and a convertible roof assembly for a convertible road vehicle, as well as a related road vehicle, which are at least partially free from the drawbacks described above and, at the same time, are simple and economical to implement.

According to this invention, a control system and method for a mobile wing assembly and a hood for a road vehicle, as well as a related road vehicle, are provided in accordance with what is claimed in the independent claims below and, preferably, in any of the claims that are directly or indirectly dependent on the independent claims.

The claims describe preferred embodiments of this invention forming an integral part of the present specification.

### BRIEF DESCRIPTION OF THE DRAWINGS

To better understand this invention, some preferred, but non-limiting, embodiments of this invention are described below, merely by way of example, and with the aid of the attached figures in which:
- Figures 1A-1B show a side view of a convertible road vehicle comprising a movable wing assembly in a first configuration (integrated into the bodywork, at rest) and a roof assembly that can be opened in an extracted configuration;
- Figures 2A-2B show a side view of the road vehicle in Figure 1 with the movable wing assembly in a second configuration (projecting from the bodywork, operational) and the roof assembly that can be opened in an extracted configuration;
- Figure 3A shows a side view of the vehicle in Figures 1 and 2 with the movable wing assembly in the first configuration and the roof assembly in a transitional configuration with an open cover to allow the transition from the extracted configuration to a retracted position (or vice versa), where the cover does not collide with the movable wing assembly of the same road vehicle;
- Figure 3B shows a side view of the vehicle in Figures 1 and 2 with the movable wing assembly in the second configuration and the roof assembly in a transitional configuration with the cover open to allow the transition from the extracted configuration to the retracted position (or vice versa), where the cover collides with the movable wing assembly of the road vehicle; and
- Figure 4 schematically shows a control system for the movable wing and roof assembly for a road vehicle.

### EMBODIMENTS OF THE INVENTION

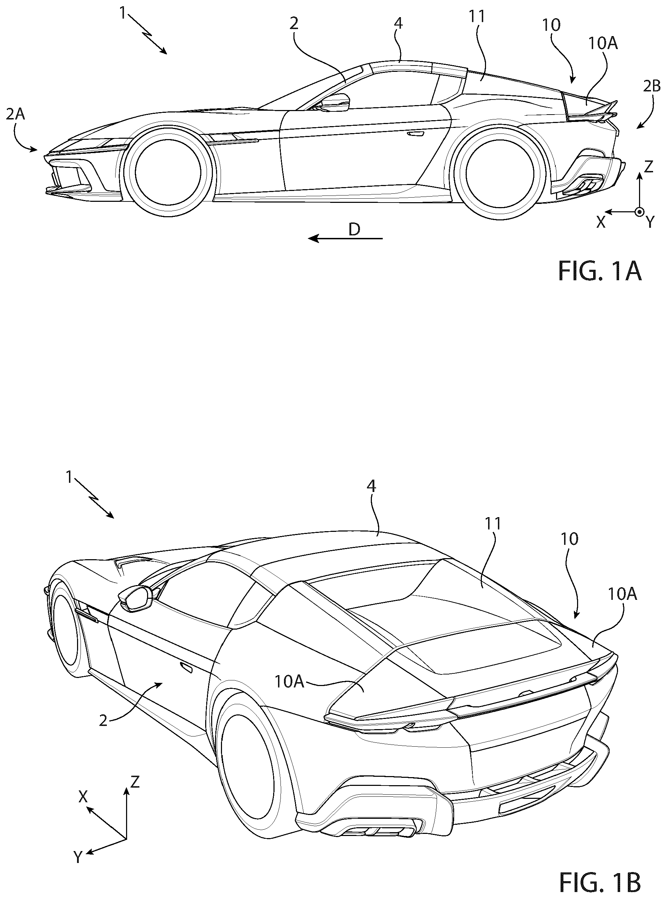

In Figure 1, the reference number 1 generically denotes a road vehicle as a whole, in particular a car, equipped with two front wheels and two rear wheels, of which at least one pair (or all) receive torque from a drivetrain.

The same reference numbers and letters in the figures identify the same elements or components with the same function.

In the context of the present description the term "second" component does not imply the presence of a "first" component. These terms are in fact used as tags to improve clarity and should not be understood in a limiting way.

The elements and features disclosed in the various preferred embodiments, including the drawings, may be combined with one another without however departing from the scope of protection of the present application as described below.

It should be specified that, below in this description, expressions such as "above", "below", "in front of", "behind" and the like are used with reference to the normal movement of the road vehicle 1 along the normal forward direction D.

As illustrated in the non-limiting embodiment in Figure 1, it is also possible to define:
- a longitudinal axis X integral with the road vehicle 1 and arranged, in use, horizontal and parallel to a normal forward direction D of the road vehicle 1;
- a transverse axis Y integral with the road vehicle 1 and arranged, in use, horizontal and orthogonal to the axis X; and
- a vertical axis Z, integral with the road vehicle 1 and arranged, in use, vertical and orthogonal to the axes X, Y.

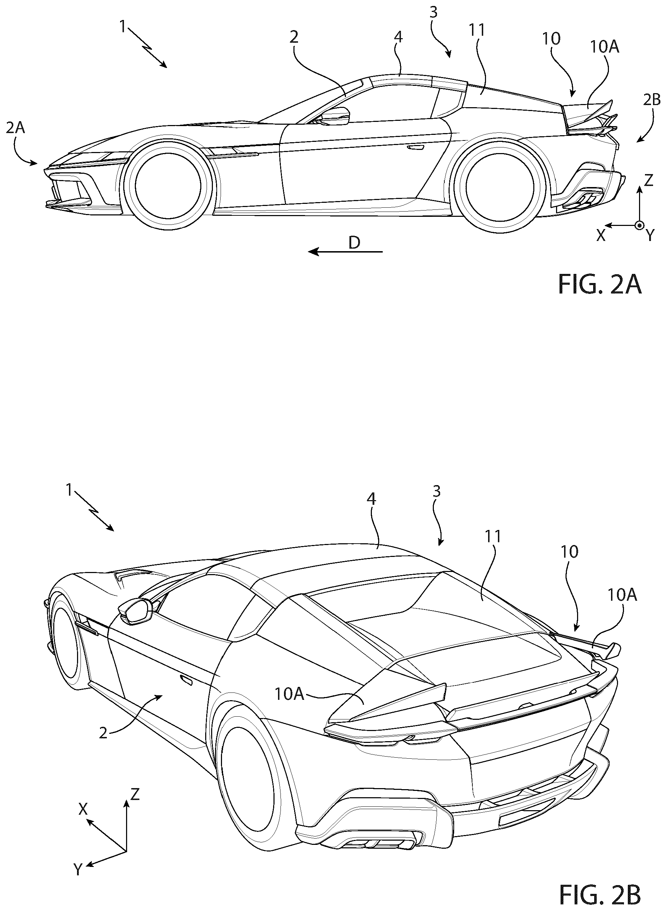

Reference is now made to what is depicted in Figures 1A-1B, 2A-2B without this limiting what is described below. Specifically, Figures 1A-1B, 2A-2B show a road vehicle 1, here a sports or high-performance car, comprising at least all the components described above.

The road vehicle 1 comprises at least one rear wing 10A (in particular two, preferably symmetrical to each other and arranged on opposite sides of the road vehicle 1 with respect to the transverse axis Y, as shown in Figures 1A-1B and 22A-2B) fixed to a rear part 2A of the road vehicle 1, relative to a forward direction D of the road vehicle 1. In some cases, the road vehicle 1 also includes a front wing (not shown) attached to a front part 2B of the road vehicle 1.

The physical principle behind the operation of an automotive wing is based on the same physical principle that enables aircraft to fly; however, unlike in the aviation sector, the road vehicle 1 is pushed by the air towards the ground during its motion to create negative lift. In other words, the rear wing 10A and/or the front wing define respective airfoils that, from a given speed, generate corresponding lift towards the ground on which the road vehicle 1 advances.

With reference only to the rear wing 10A, the latter is herein of the retractable or extractable type, that is, it is designed to switch between a first configuration (integrated into the bodywork, at rest) or retracted configuration (Figures 1A and 1B) in which the rear wing 10A is arranged within or integrated into the bodywork 2 of the road vehicle 1; and a second configuration (protruding from the bodywork, operational) or extracted configuration (Figures 2A and 2B) in which the rear wing 10A is arranged externally to the bodywork 2 of the road vehicle 1 and exerts an aerodynamic effect (negative lift).

The retracted position defines a rest position of the rear wing 10A, and the extracted position defines a working or operational position of the rear wing 10A.

In certain non-limiting cases, the rear wing 10A is generally moved from the retracted position to the extracted position when the road vehicle 1 reaches a certain forward speed.

In other non-limiting cases, the rear wing 10A is moved from the retracted position to the extracted position as a result of a driver command, for example following the selection of a sports driving mode. It should be noted that the same considerations also apply to the front wing.

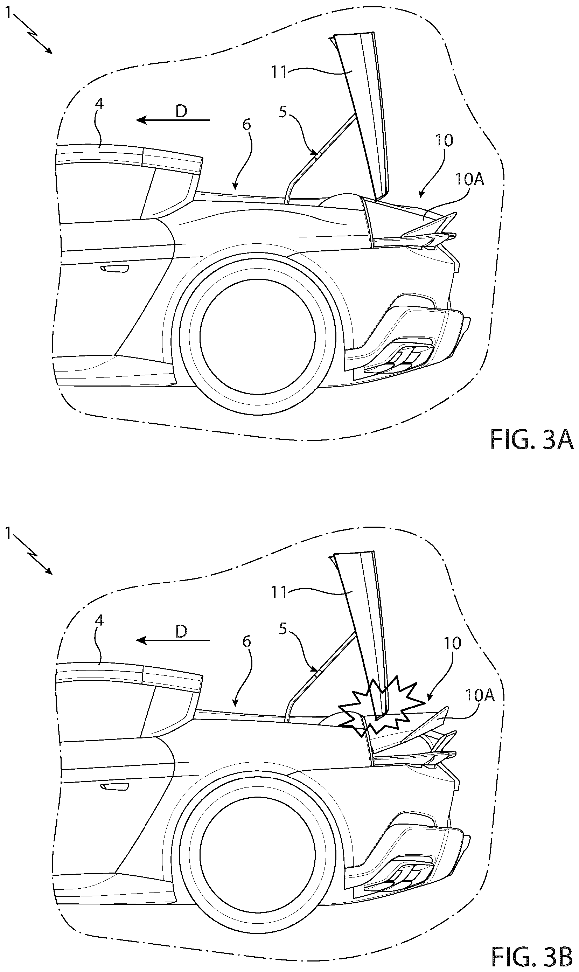

The bodywork 2 also includes a retractable or extractable roof assembly 3. The roof assembly 3 comprises a folding/convertible roof 4, which is configured to move from a retracted position to an extracted position (and vice versa); and a cover 11, which is a movable part of the bodywork 2 of the road vehicle 1 (thus visible from outside the road vehicle 1). The cover 11 is moved by an actuator system 5 to move from a closed configuration (illustrated for example in Figures 1A-2B) to an open configuration (illustrated in Figures 3A, 3B). In particular, the cover 11 delimits the top in the closed configuration and a compartment 6 configured to accommodate the roof 4 in the retracted configuration.

Preferably but without imposing limitations, the compartment 6 corresponds to the upper portion of a vehicle boot.

Therefore, the roof assembly 3 is configured to switch the road vehicle 1 between a respective first retracted or drop-top configuration (that is, in which the passenger compartment is uncovered) and a second extracted or covered configuration (that is, in which the passenger compartment is covered). When switching from one configuration to the other, the roof assembly 3 is configured to assume a transitional configuration, wherein the cover 11 is in the open configuration and thus allows the transition of the roof 4 from the extracted to the retracted configuration (and vice versa), thus leaving the access/exit to/from the compartment 6 free.

In particular, therefore, in the retracted configuration, the roof 4 is arranged inside the compartment 6, that is, the bodywork 2, so that the passenger compartment of the road vehicle 1 is at least partially open at the top.

In particular, in the extracted configuration, the roof 4 is arranged so as to cover the passenger compartment of the road vehicle 1 above.

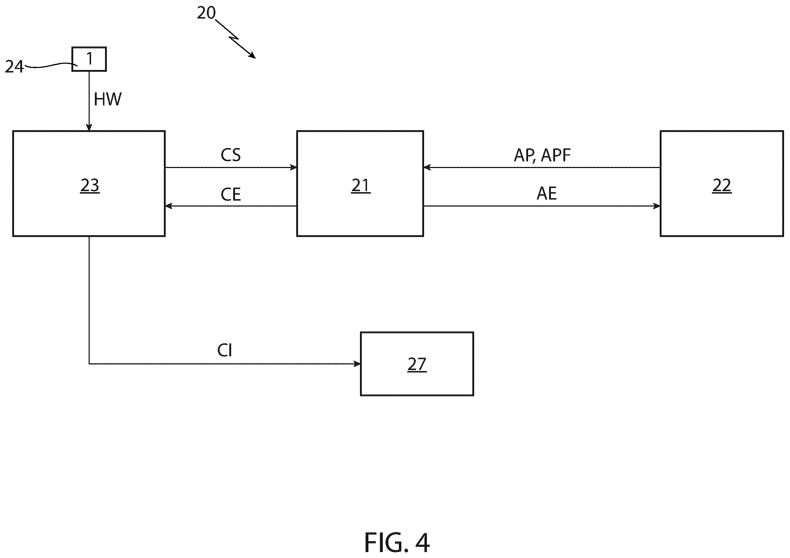

Figure 4 shows a control system 20 for the movable wing assembly and roof assembly 3 for a road vehicle 1. For the sake of simplicity and to facilitate understanding of this invention, reference is made below to a road vehicle of the type shown in Figures 1A-1B, 2A-2B and 3A-3B, and therefore the same reference numbers will be used below, without this limiting this invention. In particular, the movable wing assembly 10, here comprising two rear wings 10A, and the cover 11 of the road vehicle 1 are at least partly adjacent to each other in at least one respective operating condition, for example when the cover 11 is not in the transition configuration (that is, when the roof assembly is entirely in the covered or drop-top position) and the rear wings 10A are in the retracted position.

In particular, the term "condition" refers to a condition indicative of an operational state (that is, during use, in particular a configuration defined by a position) of the movable wing assembly 10 (for example, the position of at least one, in particular all the wings 10A) or of the roof assembly 3 (for example, of the roof 4 or cover 11).

In other words, "operational condition" means a configuration other than the transition configuration; therefore, the covered or drop-top configuration in the case of the roof assembly 3 and the retracted or extracted configuration in the case of the movable wing assembly 10.

In particular, the system 20 comprises:
- a main electronic control unit 21, also referred to as a master ECU for logic arbitration (for example, preferably a *Body Computer Node,* BCM);
- an electronic control unit 22 of the movable wing assembly 10, also referred to as *AeroWings Node,* NAM, in communication with the main electronic control unit 21 and designed to generate an output herein alternatively represented by AP (*AerowingsPosition*) and APF (*AerowingsPositionFailSts*) signals output from the same electronic control unit 22 of the movable wing assembly 10, indicative of an operating condition of the movable wing assembly 10; and
- an electronic control unit 23 of the roof assembly 3, also referred to as *Capote Node,* NCP, in communication with the main electronic control unit 21 and designed to generate an output, represented herein by CS (*CapoteSts*) signals output from the electronic control unit 23 of the roof assembly 3, indicative of an operating condition of the roof assembly 3, in particular of the cover 11.

According to one aspect of this invention, the main electronic control unit 21 is configured to:
- receive and process the respective outputs AP, APF, CS of the electronic control unit 22 of the movable wing assembly 10 and the electronic control unit 23 of the roof assembly 3, particularly of the cover 11, to determine the presence of a potential interference between the operating conditions of the movable wing assembly 10 and of the roof assembly 3, particularly of the cover 11;
- if a potential interference is determined to be present between the operating conditions of the movable wing assembly 10 and the roof assembly 3, particularly of the cover 11, generate (by means of the main electronic control unit 21) and transmit an inhibition output, here represented by CE (*CapoteEnable*) and AE (*AerowingsEnable*) signals, alternately to the electronic control unit 22 of the movable wing assembly 10 or to the electronic control unit 23 of the roof assembly 3, in particular of the cover 11, so as to prevent the switching of the operating condition of the movable wing assembly 10 or the roof assembly 3, in particular of the cover 11, to prevent a collision between the movable wing assembly 10, in particular the rear wings 10A, and the roof assembly 3, in particular the cover 11.

The output generated by the electronic control unit 22 of the movable wing assembly 10 comprises at least data indicative of the spatial position assumed or assumable by the movable wing assembly 10, represented by the signal AP; in addition, the output generated by the electronic control unit 23 of the roof assembly 3, in particular of the cover 11, comprises at least data indicative of the spatial position assumed or assumable by the roof assembly 3, in particular of the cover 11, represented by the signal CS.

Consequently, according to one aspect of this invention, the main electronic control unit 21 is configured to determine the presence of a potential interference between the operating conditions of the movable wing assembly 10 and the roof assembly 3, in particular of the cover 11, by determining the presence of a potential interference between the assumed or assumable spatial positions of the movable wing assembly 10 and the roof assembly 3, in particular of the cover 11.

In order to generate the output indicative of an operating condition of the roof assembly 3, in particular of the cover 11, the electronic control unit 23 of the roof assembly 3, in particular of the cover 11, is designed to receive an open command of the cover 11, indicated by the reference HW, and to generate an output indicative of an opening request of the roof assembly 3, in particular of the cover 11, which, according to one aspect of this invention, is transmitted together with the aforementioned data relating to the spatial position of the cover 11 and, therefore, forming part of the output CS. In addition, the main electronic control unit 21 is also configured to determine the presence of a potential interference between the operating conditions of the movable wing assembly 10 and the roof assembly 3, in particular of the cover 11, also based on the output indicative of a request for the opening of the roof assembly 3, in particular of the cover 11.

In particular, according to one aspect of this invention, the road vehicle 1 comprises drive means 24 of the roof assembly 3, in particular of the cover 11, designed to enable the open command of the roof assembly 3, in particular of the cover 11, to be sent when the driver activates it. By way of example, the drive means 24 of the roof assembly 3, in particular of the cover 11, comprise a drive button 24 that, when pressed by the driver, enables the open command of the roof assembly 3, in particular of the cover 11, to be sent.

In order to generate and transmit an inhibition output alternatively for the electronic control unit 22 of the movable wing assembly 10 or for the electronic control unit 23 of the roof assembly 3, in particular of the cover 11, the main electronic control unit 21 is alternatively designed for:
- generating an inhibition notification for the movable wing assembly 10 if it is determined that the assumed spatial position of the movable wing assembly 10 conflicts with the current spatial position of the roof assembly 3, particularly the cover 11; and
- generating an inhibition notification for the roof assembly 3, in particular of the cover 11, if it is determined that the assumable spatial position of the roof assembly 3, in particular of the cover 11, conflicts with the current spatial position of the movable wing assembly 10.

According to one aspect of this invention, the output generated by the electronic control unit 22 of the movable wing assembly 10 also comprises data indicative of the spatial position of the movable wing assembly 10 determined by a fault condition of the movable wing assembly 10, represented by the output APF; in addition, the output generated by the electronic control unit 23 of the roof assembly 3 in particular of the cover 11, further comprises data indicative of the spatial position of the roof assembly 3, in particular of the cover 11, determined by a fault condition of the roof assembly 3, in particular of the cover 11, represented by the output CS. In addition, the main electronic control unit 21 is designed to determine the presence of a potential interference between the operating conditions of the movable wing assembly 10 and the roof assembly 3, in particular of the cover 11, also on the basis of the positions of the movable wing assembly 10 and the roof assembly 3, in particular of the cover 11, determined by respective fault conditions of the same; in addition, wherein the main electronic control unit 21 is designed to generate and transmit an inhibit command, represented by the signals CE and AE, alternatively to the electronic control unit 22 of the movable wing assembly 10 or to the electronic control unit 23 of the roof assembly 3, in particular of the cover 11, also on the basis of the positions of the movable wing assembly 10 and the roof assembly 3, in particular of the cover 11, determined by respective fault conditions thereof.

Therefore, according to one aspect of this invention, the main electronic control unit 21 is designed to implement *a master-slave* type control algorithm, wherein the same main electronic control unit 21 operates as *master* and the electronic control units 22, 23 operate as *slave.* More specifically, given the AP, APF, CS outputs, the main electronic control unit 21 is designed to implement two separate enabling or inhibition strategies for the movable wing assembly 10, specifically the rear wings 10A, and the roof assembly 3, specifically the cover 11. In particular, in order to enable or inhibit the operation of the movable wing assembly 10, the main electronic control unit 21 is designed to:
- enable the movable wing assembly 10 (AE enabled, that is, an enabling command is transmitted to the electronic control unit 22), that is, to enable switching between the extracted and retracted configurations (or vice versa) of the rear wings 10A, if it is determined from the output CS that the roof assembly 3 is in the drop-top configuration or in the covered configuration, that is, there is no switching between the roof assembly 3 configurations, in particular the cover 11 is not open; and
- inhibit the operation of the movable wing assembly 10 (AE disabled, that is, an inhibit command is transmitted to the electronic control unit 22), that is, to not allow switching between the extended configuration and the retracted configuration (or vice versa) of the rear wings 10A, in the event that it is determined, from the output CS, that the roof assembly 3 is in the transitional configuration with the cover 11 in the open configuration, that is, it is switching from the drop-top to the covered configuration (or vice versa), or is in an intermediate configuration between the above positions, that is, the roof assembly 3, in particular the cover 11, is switching between the positions assumed by the latter, or is in a fault condition that does not allow the correct positioning of the roof assembly 3.

Similarly, in order to enable or inhibit the operation of the roof assembly 3, in particular the cover 11, the main electronic control unit 21 is designed to:
- enable the roof assembly 3, in particular the cover 11 (CE enabled, that is, an enabling command is transmitted to the electronic control unit 23), or to enable the switching between the drop-top and the covered configuration (or vice versa) of the roof assembly 3, in particular the cover 11, if it is determined from the outputs AP and APF that the movable wing assembly 10 is in the retracted configuration and a fault condition is not present; and
- inhibit the operation of the roof assembly 3, in particular the cover 11 (CE disabled, that is, an inhibition command is transmitted to the electronic control unit 23), that is, not to allow switching between the drop-top and the covered configuration (or vice versa), if it is determined from the outputs AP and APF that the movable wing assembly 10 is in the extracted configuration and/or a fault condition is present, which could therefore lead to a collision with the roof assembly 3, in particular with the cover 11, if the latter is moved.

According to one aspect of this invention, the main electronic control unit 21 is in communication with the electronic control unit 22 of the movable wing assembly 10 by means of a movable wing assembly communication network; in addition, the main electronic control unit 21 is in communication with the electronic control unit 23 of the roof assembly 3, in particular of the cover 11, by means of a roof assembly 3 communication network, in particular of the cover 11, independent and separate from the movable wing assembly communication network 25.

The system 20 further comprises a human-machine interface (*Human-Machine Interface,* HMI) 27 in communication with the electronic control unit 23 of the roof assembly 3, in particular of the cover 11; in particular, the electronic control unit 23 of the roof assembly 3, in particular of the cover 11, is also designed to generate an output, represented by a signal CI, indicative of information relating to the operating condition of the roof assembly 3, in particular the cover 11, at least on the basis of the inhibit command, represented by the signal CE, transmitted by the main electronic control unit 21 and the output indicative of the operating conditions of the roof assembly 3, in particular of the cover 11, represented by the signal CS. In addition, the HMI 27 is designed to receive and process the output generated by the electronic control unit 23 of the roof assembly 3, in particular of the cover 11, to provide a driver of the road vehicle 1 with the information related to the operating condition of the roof assembly 3, in particular of the cover 11. According to one aspect of this invention, the HMI 27 comprises a display, housed for example in the passenger compartment of the road vehicle 1, and configured to receive and process the information represented by the CI (CapoteInformationForDisplay) signal for displaying it to the driver of the road vehicle 1.

According to this invention, a method for controlling the movable wing assembly 10 and the roof assembly 3, in particular the cover 11, for the road vehicle 1, implemented by the system 20 in the manner described above with reference to the components of the same system 20, is also provided.

The system, method and related vehicle described above have many advantages.

In particular, the system 20 and the related method make it possible to avoid collisions between the movable wing assembly 10, in particular the rear wings 10A, and the roof assembly 3, in particular the cover 11, in the event that at least one of the two parts of the road vehicle 1 is put into motion.

This strategy for managing the movement of the movable wing assembly 10 and the roof assembly 3, in particular the cover 11, is advantageously applicable to sports cars, such as the road vehicle 1, without, however, this limiting this invention.

### LIST OF REFERENCE NUMBERS IN THE FIGURES

1 - road vehicle
2 - bodywork
2A - rear
2B - front
3 - roof assembly
4 - retractable roof
5 - actuator system
6 - compartment
10 - movable wing assembly
10A - rear wing
11 - cover
20 - system
21 - main electronic control unit
22 - electronic control unit of the movable wing assembly 10
23 - electronic control unit of the cover 11
24 - drive means
27 - human-machine interface
D - forward direction
AP - signal
APF - signal
CS - signal
CE - signal
AE - signal
CI - signal

## Claims

1. A control system (20) for a movable wing assembly (10) and a roof assembly (3) of a road vehicle (1), the movable wing assembly (10) and the roof assembly (3) being at least partially adjacent to each other along a direction transverse to a standard direction (D) of travel of the road vehicle (1); the roof assembly (3) comprising at least a roof (4) retractable into a compartment (6) and a cover (11) delimiting the compartment (6) at the top; the cover (11) being movable between an open configuration and a closed configuration so as to selectively allow access or egress of the roof (4) from the compartment (6);
the system (20) comprises:
- a main electronic control unit (21);
- an electronic control unit (22) of the movable wing assembly (10) in communication with the main electronic control unit (21) and configured for generating an output (AP, APF) indicative of an operating condition of the movable wing assembly (10); and
- an electronic control unit (23) of the roof assembly (3), in particular of the cover (11), in communication with the main electronic control unit (21) and designed to generate an output (CS) indicative of an operating condition of the roof assembly (3), in particular of the cover (11), where the main electronic control unit (21) is configured for:
- receiving and processing the respective outputs (AP, APF, CS) of the electronic control unit (22) of the movable wing assembly (10) and the electronic control unit (23) of the roof assembly (3), particularly of the cover (11), to determine the presence of a potential interference between the operating conditions of the movable wing assembly (10) and of the roof assembly (3), particularly of the cover (11);
- generating an inhibition output (CE, AE), by means of the main electronic control unit 21, if a potential interference condition is determined to be present between the operating conditions of the movable wing assembly (10) and the roof assembly (3), in particular of the cover (11); and
- transmitting the inhibition output (CE, AE) alternately to the electronic control unit (22) of the movable wing assembly (10) or to the electronic control unit (23) of the roof assembly (3) in particular of the cover (11), so as to prevent the switching of the operating condition of the movable wing assembly (10) or the roof assembly (3), in particular of the cover (11), so as to prevent a collision between the movable wing assembly (10) and the roof assembly (3), in particular the cover (11).

2. The system (20) according to claim 1, wherein the output (AP, APF) generated by the electronic control unit (22) of the movable wing assembly (10) comprises at least data indicative of the spatial position assumed or assumable (AP) by the movable wing assembly (10), and wherein the output (CS) generated by the electronic control unit (23) of the roof assembly (3), in particular of the cover (11), includes at least data indicative of the assumed or assumable spatial position (CS) of the roof assembly (3), in particular of the cover (11),
and wherein the main electronic control unit (21) is configured to determine the presence of a potential interference between the operating conditions of the movable wing assembly (10) and the roof assembly (3), in particular of the cover (11), by determining the presence of a potential interference between the assumed or assumable spatial positions of the movable wing assembly (10) and the roof assembly (3), in particular of the cover (11).

3. The system (20) according to claim 2, wherein, in order to generate an output (CS) indicative of an operating condition of the roof assembly (3), in particular of the cover (11), the electronic control unit (23) of the roof assembly (3), in particular of the cover (11), is designed to receive an open command (HW) of the roof assembly (3), in particular of the cover (11), and to generate an output indicative of a request to open the cover (11),
wherein the main electronic control unit (21) is also configured to determine the presence of a potential interference between the operating conditions of the movable wing assembly (10) and the roof assembly (3), in particular of the cover (11), also based on the output indicative of a request for the opening of the roof assembly (3), in particular of the cover (11).

4. The system (20) according to any one of claims 2-3, wherein, in order to alternately generate an inhibition output (CE, AE) for the electronic control unit (22) of the movable wing assembly (10) or for the electronic control unit (23) of the roof assembly (3), in particular of the cover (11), so as to switch the operating condition of either the movable wing assembly (10) or the roof assembly (3), in particular the cover (11), to prevent a collision between the movable wing assembly (10) and the roof assembly (3), in particular the cover (11), the main electronic control unit (21) is alternately configured for:
- generating an inhibition notification for the movable wing assembly (10) if it is determined that the assumable spatial position of the movable wing assembly (10) conflicts with the current spatial position of the roof assembly (3), in particular the cover (11); and
- generating an inhibition notification for the roof assembly (3), in particular of the cover (11), if it is determined that the assumable spatial position of the roof assembly (3), in particular of the cover (11), conflicts with the current spatial position of the movable wing (10) assembly.

5. The system (20) according to any one of claims 2-4, wherein the output generated by the electronic control unit (23) of the movable wing assembly (10) further comprises data indicative of the spatial position of the movable wing assembly (10) determined by a fault condition (APF) of the movable wing assembly (10), and wherein the output generated by the electronic control unit (23) of the roof assembly (3) in particular of the cover (11), further includes data indicative of the spatial position of the roof assembly (3), in particular of the cover (11), determined by a fault condition (CS) of the roof assembly (3), in particular of the cover (11),
wherein the main electronic control unit (21) is configured for determining the presence of potential interference between the operating conditions of the movable wing assembly (10) and the roof assembly (3), in particular of the cover (11), also on the basis of the operating conditions of the movable wing assembly (10) and the roof assembly (3), in particular of the cover (11), determined by respective fault conditions of the same,
and wherein the main electronic control unit (21) is configured for generating and transmitting an inhibit command alternately to the electronic control unit (22) of the movable wing assembly (10) or to the electronic control unit (23) of the roof assembly (3), in particular of the cover (11), also based on the operating conditions of the movable wing assembly (10) and the roof assembly (3), in particular of the cover (11), determined by respective fault conditions of the same.

6. The system (20) according to any one of the preceding claims, wherein the main electronic control unit (21) is in communication with the electronic control unit (22) of the movable wing assembly (10) by means of a movable wing assembly communication network,
and wherein the main electronic control unit (21) is in communication with the electronic control unit (23) of the roof assembly (3), in particular of the cover (11), by means of a communication network of the roof assembly (3), in particular of the cover (11), independent of and separate from the movable wing assembly communication network (10).

7. The system (20) according to any one of the preceding claims and further comprising a human-machine interface (27) in communication with the electronic control unit (23) of the roof assembly (3), in particular of the cover (11),
the electronic control unit (23) of the roof assembly (3), in particular of the roof cover (11), is also configured for generating an output (CI) indicative of information related to the operating condition of the roof assembly (3), in particular of the cover (11), at least on the basis of the inhibit command (EC) transmitted by the main electronic control unit (21) and the output (CS) indicative of the operating conditions of the roof assembly (3), in particular of the cover (11),
and wherein the human-machine interface (27) is designed to receive and process the output (CI) generated by the electronic control unit (23) of the roof assembly (3), in particular of the cover (11), to provide a driver of the road vehicle (1) with the information related to the operating condition of the roof assembly (3), in particular of the cover (11).

8. A road vehicle comprising a movable wing assembly (10) and a roof assembly (3) at least partially adjacent to each other along a direction transverse to a standard direction (D) of travel of the road vehicle (1); wherein the roof assembly (3) comprises at least one roof (4) retractable into a vehicular compartment (6) and a cover (11) bounding the vehicular compartment (6) at the top; wherein the cover (11) is movable between an open configuration and a closed configuration so as to selectively allow access or egress of the roof (4) from the vehicular compartment (6); the road vehicle (1) comprising a system (20) for controlling the movable wing assembly (10) and the roof assembly (3), in particular the cover (11), for the road vehicle (1) according to any one of claims 1-7.

9. A method of controlling a movable wing assembly (10) and roof assembly (3) for a road vehicle (1), the movable wing assembly (10) and roof assembly (3) being at least partially adjacent to each other along a direction transverse to a normal direction (D) of travel of the road vehicle (1); the roof assembly (3) comprising at least one roof (4) retractable into a compartment (6) and a cover (11) bounding the compartment (6) at the top; the cover (11) being movable between an open configuration and a closed configuration so as to selectively allow access or egress of the roof (4) from the compartment (6);
the method includes the steps of:
- processing, by means of a main electronic control unit (21), an output (AP, APF) indicative of an operating condition of the movable wing assembly (10) generated by an electronic control unit (22) of the movable wing assembly (10) and an output (CS) indicative of an operating condition of the roof assembly (3), in particular of the cover (11), generated by an electronic control unit (23) of the roof assembly (3), in particular of the cover (11), to determine the presence of a potential interference between the operating conditions of the movable wing assembly (10) and the roof assembly (3), in particular of the cover (11); and
- if a potential interference condition is determined to be present between the operating conditions of the movable wing assembly (10) and the roof assembly (3), particularly of the cover (11), generate and transmit, by means of the main electronic control unit (21), an inhibition output (CE, AE) alternately for the electronic control unit (22) of the movable wing assembly (10) or for the electronic control unit (23) of the roof assembly (3), in particular of the cover (11), so as to switch the operating condition of the movable wing assembly (10) or the roof assembly (3), in particular of the cover (11), to prevent a collision between the movable wing assembly (10) and the roof assembly (3), in particular the cover (11).

10. The method according to claim 9, wherein the output (AP, APF) generated by the electronic control unit (22) of the movable wing assembly (10) comprises at least data indicative of the spatial position assumed or assumable (AP) by the movable wing assembly (10) and wherein the output (CS) generated by the electronic control unit (23) of the roof assembly (3), in particular of the cover (11) above, comprises at least data indicative of the spatial position assumed or assumable (CS) of the roof assembly (3), in particular of the cover (11) above,
and wherein the method includes the step of determining the presence of a potential interference between the operating conditions of the movable wing assembly (10) and the roof assembly (3), in particular of the cover (11), by determining the presence of a potential interference between the assumed or assumable spatial positions of the movable wing assembly (10) and the roof assembly (3), in particular of the cover (11).

11. The method according to claim 10 and further comprising the step of receiving an open command (HW) of the roof assembly (3), in particular of the cover (11), and generating an output indicative of a request to open the roof assembly (3), in particular of the cover (11),
and wherein the method further comprises the step of determining the presence of a potential interference between the operating conditions of the movable wing assembly (10) and the roof assembly (3), in particular of the cover (11), also based on the indicative output of an opening request of the roof assembly (3), in particular of the cover (11).

12. The method according to any one of claims 10 and 11 and comprising the step of generating an inhibition output (CE, AE) alternately for the electronic control unit (22) of the movable wing assembly (10) or for the electronic control unit (23) of the roof assembly (3), in particular of the cover (11) so as to switch the operating condition of the movable wing assembly (10) or the roof assembly (3), in particular of the cover (11), to prevent a collision between the movable wing assembly (10) and the roof assembly (3), in particular of the cover (11), the main electronic control unit (21) alternately:
- generating an inhibition notification for the movable wing assembly (10) if it is determined that the assumed spatial position of the movable wing assembly (10) conflicts with the current spatial position of the roof assembly (3), particularly the cover (11); and
- generating an inhibition notification for the cover (11) if it is determined that the assumable spatial position of the roof assembly (3), particularly of the cover (11), conflicts with the current spatial position of the movable wing (10) assembly.

13. The method according to any one of claims 10 to 12, wherein the output generated by the electronic control unit (23) of the movable wing assembly (10) further comprises data indicative of the spatial position of the movable wing assembly (10) determined by a fault condition (APF) of the movable wing assembly (10), and wherein the output generated by the electronic control unit (23) of the roof assembly (3) in particular of the cover (11), further comprises data indicative of the spatial position of the roof assembly (3), in particular of the cover (11), determined by a fault condition (CS) of the roof assembly (3), in particular of the cover (11),
wherein the method further comprises the step of determining the presence of a potential interference between the operating conditions of the movable wing assembly (10) and the roof assembly (3), in particular of the cover (11), also based on the operating conditions of the movable wing assembly (10) and the roof assembly (3), in particular of the cover (11), determined by respective fault conditions of the same,
and wherein the method further comprises the step of alternately generating and transmitting an inhibit command to the electronic control unit (22) of the movable wing assembly (10) or the electronic control unit (23) of the roof assembly (3), in particular of the cover (11), also based on the operating conditions of the movable wing assembly (10) and the roof assembly (3), in particular of the cover (11), determined by respective fault conditions thereof.

14. The method according to any one of claims 10 to 13, and further comprising the step of generating an output (CI) indicative of information related to the operating condition of the roof assembly (3), in particular of the cover (11), at least based on the inhibit command (EC) transmitted from the main electronic control unit (21) and the output (CS) indicative of the operating conditions of the roof assembly (3), in particular of the cover (11),
and wherein the method further comprises the step of processing the output (CI) generated by the electronic control unit (23) of the roof assembly (3), in particular of the cover (11), to provide a driver of the road vehicle (1) with the information related to the operating condition of the roof assembly (3), in particular of the cover (11).
